(19)

Europäisches
Patentamt
European
Patent Office
Office européen
des brevets

(11)  **EP 3 258 389 A1**

(12)  # EUROPEAN PATENT APPLICATION
published in accordance with Art. 153(4) EPC

(43) Date of publication:
**20.12.2017  Bulletin 2017/51**

(51) Int Cl.:
***G06F 17/20*** (2006.01)

(21) Application number: **16749536.5**

(86) International application number:
**PCT/RU2016/050003**

(22) Date of filing: **05.02.2016**

(87) International publication number:
**WO 2016/130048 (18.08.2016 Gazette 2016/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.02.2015  RU 2015104624**

(71) Applicant: **Obschestvo S Ogranichennoi Otvetstvennostiyu "Mivar"
Moscow 127572 (RU)**

(72) Inventors:
• **VARLAMOV, Oleg Olegovich
Moscow 111672 (RU)**
• **KHADIEV, Andrei Maratovich
Surgut 628403 (RU)**
• **CHIBIROVA, Marina Olegovna
Moscow 115563 (RU)**
• **SERGUSHIN, Georgii Sergeevich
Krasnogorsk 143408 (RU)**
• **ANTONOV, Pavel Dmitrievich
Moscow 129515 (RU)**

(74) Representative: **Studio Torta S.p.A.
Via Viotti, 9
10121 Torino (IT)**

(54)  **AUTOMATED ACQUISITION OF A LOGICAL DEDUCTION PATH IN A MIVAR KNOWLEDGE BASE**

(57)  The invention relates to the field of control and computing technologies. A method is provided for building an inference path in a knowledge base comprising a representation of a model of a subject domain in the form of objects and links arranged in an oriented bipartite graph. The objects contain parameters, and the links contain rules; each rule has an input variable and an output variable, and each parameter linked with a rule is either an input variable or an output variable of the rule. A collection of known parameters is generated, and one or more required parameters are specified. The method comprises performing processing with respect to each known parameter which has not undergone the processing before, in order to find the required parameters. The processing comprises: determining launchable rules in which the known parameter is an input variable, for which all remaining input variables are known, and which have not been launched before; launching the determined launchable rules and adding output variables of the launched rules to the collection of known parameters; if all the required parameters are found, the processing is terminated. A sequence of launched rules is formed in the order in which they were launched; the sequence represents the inference path.

FIG. 3

EP 3 258 389 A1

**Description**

Field of the Invention

The invention generally relates to the field of control and computing technologies, and can be used in development of expert systems, automated control systems and formation of knowledge bases. More specifically, the invention is related to methods and systems for automatedly building an inference path in a knowledge base.

Background of the Invention

Development of information systems and technologies necessitates generation and use of various software decision support systems (DSS). DSSs consist of two main components: data storage and analytical tools.

Models of subject domains, various documents and knowledge bases may act as data storage. In information science and artificial intelligence research, knowledge base (KB) is a special kind of database designed for handling knowledge (metadata). A knowledge base comprises structured information covering a certain field of knowledge to be used by a cybernetic device (or person) with a specific purpose. Current knowledge bases operate together with information retrieval systems, have a classified structure and format of knowledge representation. Comprehensive knowledge bases contain not only factual information, but also rules of inference that allow automatic reasoning on newly introduced facts and, as a consequence, meaningful processing of information. A hierarchical way to represent a set of concepts and their relations in a knowledge base in classical implementations is named ontology.

Analytical DSS tools are designed to assist in making decisions based on the use of data, depending on the type of which the DSSs can be divided into operational and strategic. Operational DSSs are intended for immediately responding to a current situation, while strategic DSSs are based on analysis of information from different sources with employing information contained in systems that accumulate experience in solving problems.

DSSs may rely upon various decision-making methods. There are three main stages in development of a DSS:

- retrieving and representing knowledge;
- making decisions;
- constructing "human-machine" (dialogue) systems.

First, a subject domain is described, since the more information on a situation under analysis is involved in the decision-making process, the more reasonable the inference will be. As known, there are various approaches, methods, and languages for representing data. Currently, the most widely used are technologies based on ontologies and technologies based on cognitive maps. It should be noted that both the ontology-based technologies and the cognitive map-based technologies typically employ rather slow decision search algorithms, often depth-first search algorithms. Thus, cognitive maps represent a weighted graph of interrelations of objects/factors and have both positive and negative weights. Search for decision comprises searching the graph for a path with minimum or maximum weight, therefore, all vertices are traversed, thereby causing large computational complexity, tending to exhaustive search in the worst case.

US 2014/0114949 A1 discloses a knowledge management system comprising an ontology knowledge base and means for searching the knowledge base. However, principles of constructing and operating ontologies imply subjectivity, which leads to a considerable difference in descriptions of subject domains by different experts. Furthermore, the proposed methods of searching for decisions either possess NP-complete complexity or require much experience to be gained. In addition, in the case of using ontologies and standard methods of handling them, it is impossible to perform computations and set values to objects inside the ontologies.

Furthermore, RU 2485581 C1 discloses an expert searching system comprising a knowledge base having a format of an information graph, and an inference machine. However, the following is also typical to said known technical solution: "high-level professional experts should be found and involved to fill knowledgebase 1 with information".

Summary of Invention

The object of the present invention is to provide methods and systems for automatedly building an inference path in a mivar knowledge base, which would ensure, at least, faster search for a decision.

According to one aspect of the invention, the object is attained by a computer-implemented method for automatedly building an inference path in a knowledge base comprising a representation of a model of a subject domain in the form of objects and links organized in an oriented bipartite graph. The objects contain parameters, and the links contain rules, and each rule has at least one input variable and at least one output variable, and each parameter associated with a rule is either an input variable or an output variable of the rule. The method comprises: forming a collection of known parameters and specifying one or more required parameters. Processing is carried out for each known parameter which has not undergone the processing, in order to find the required parameters. The processing comprises: determining launchable rules in which a known parameter is an input variable, for which all remaining input variables are known, and which have not been launched before; then launching the determined launchable rules and adding output variables of the launched rules to the collection of known parameters. If all the required parameters are found, the processing is stopped. A natural alternative criterion for stopping said processing is establishing impossibility of obtaining a decision based on the available known parameters, i.e. if it is determined that it is impossible to reach the required parameters from current known parameters. Then, in accordance with the provided method, a sequence of launched rules is built in an order in which said rules were launched. The sequence of rules built in such a way represents the inference path. According to a preferred embodiment, the present method further comprises filtering the built sequence of rules so that the sequence contains only those rules the launching of which was directly involved in finding the required parameters.

The collection of known parameters may represent a queue or a stack, while the known parameters are successively retrieved from the queue or stack, respectively, to carry out said processing. For example, if launchable rules are not determined for a known parameter, a next known parameter is retrieved from the queue or stack, and said processing is executed with respect thereto.

The method may further comprise outputting the found required parameters and the built inference path onto a display device. The method may further comprise entering the known parameters through a user interface.

The method may further comprise outputting an error message and/or unfound required parameters if at least part of the required parameters has not been found from said processing.

Preferably, for each parameter, information on all rules for which the parameter is an input or output variable is stored in the form of at least one list, and for each rule, information on all input and output variables of the rules, including information on the number of input and output variables, is stored in the form of at least one list.

Preferably, for each found in said processing, information is further stored regarding a launched rule in which the parameter is an output variable, this parameter has been found; and for each launchable rule, information is further stored regarding a parameter among the parameters which are an input variable of said rule that has led in said processing to determining that this rule is launchable.

Preferably, for each rule an indicator is further stored, the indicator showing whether the rule has been launched or not, and, after the rule has been launched, the indicator is modified to indicate that the rule has been launched.

Preferably, the objects further comprise classes, wherein each class may include other classes and/or parameters, each parameter relating to one class only; the links further comprise relations, each relation describing a relationship between abstract variables, wherein each rule includes a reference to a relation.

The representation of the subject domain model preferably further comprises one or more restrictions, wherein input variables of each restriction are values of the parameters. Each restriction comprises a reference to a relation that expresses a condition to be met by input variables, and an output variable of each restriction is a Boolean variable.

The method may further comprise: launching at least one restriction by specifying respective known parameters as its input variables; and outputting an error message and terminating the execution of the method if a condition expressed by the restriction is not satisfied by respective known parameters.

The filtering of the formed sequence of rules according to the present method preferably comprises: forming a list of required parameters from said required parameters; while the list of required parameters is not empty, retrieving a required parameter from the list of required parameters and identifying a rule by which the selected required parameter was directly determined; if the identified rule has not been previously added to a global sequence of rules being formed, forming a local sequence of rules involved in determining the selected required parameter, beginning with adding the identified rule to the local sequence of rules, wherein said forming of the local sequence of rules comprises, for each rule, starting with said identified rule: identifying an initiator parameter which is an input variable of the rule and which initiated launching the rule in said processing; if the rule has one or more other input variables, adding for each of said one or more other input variables a parameter, which is said input variable, to the beginning of the list of required parameters, and determining a place for insertion of the local sequence of rules that is to be generated for the added parameter into the global sequence of rules, the insertion place indicating the rule before which the local sequence of rules to be generated for the added parameter should be inserted into the global sequence of rules; while said forming of the local sequence of rules is not completed: selecting, among the launched rules, a rule the output variable of which is said initiator parameter, and checking whether the selected rule is present in the global sequence of rules and whether it is the insertion place; if the selected rule is present in the global sequence of rules or it is the insertion place, completing said forming of the local sequence of rules; if the selected rule is not present in the global sequence of rules and it is not the insertion place, adding the selected rule to the end of the local sequence of rules being formed and checking whether said rule is a rule the input variables of which were only known parameters, and if the input variables of the selected rule were only known parameters, completing said forming of the local sequence of rules; and if an insertion place is determined for the required parameter, inserting the formed local sequence of rules into the insertion place in the global sequence of rules, otherwise adding the local sequence of rules to the end of the global sequence of rules.

The resulting global sequence of rules represents an optimized inference path.

The method may further comprise, when adding a rule to the local sequence of rules, entering output variables of the rule to a list of found parameters being formed if those output variables are not present in the list of found parameters. Required parameters present in the list of found parameters are removed from the list of required parameters.

Preferably, each of the local sequence of rules and the global sequence of rules is a list, and the list of required parameters is a linked list.

According to another aspect of the invention, a computer-implemented system is provided for automated construction of an inference path in the knowledge base described above. The system comprises: means for forming a collection of known parameters and for specifying one or more required parameters; means for processing each known parameter which has not been processed before, in order to find the required parameters. The processing comprises: determining launchable rules in which a known parameter is an input variable, for which all other input variables are known, and which have not been launched before, and launching the determined launchable rules and adding output variables of the launched rules to the collection of known parameters. If all the required parameters are found, the processing is stopped. The present system further comprises means for forming a sequence of launched rules in the order in which they were launched, the formed sequence of rules representing the inference path. According to a preferred embodiment, the present system may also comprise means for filtering the formed sequence of rules so that it contains only those rules which were directly launched to find the required parameters. The filtering is preferably executed by the method described above.

According to yet another aspect of the invention, a computer device is provided, the computer device adapted for automated construction of an inference path in the knowledge base described above. The computer device comprises one or more processors and one or more storage units for storing computer-executed instructions, which when executed by one or more processors instruct the one or more processors to: form a collection of known parameters and specify one or more required parameters; process each known parameter which has not been processed before in order to find the required parameters, wherein said processing comprises: determining launchable rules in which the known parameter is an input variable, for which all remaining input variables are known, and which have not been launched before, and launching the determined launchable rules and adding output variables of the launched rules to the collection of known parameters; wherein if all the required parameters are found, said processing is stopped; and forming a sequence of launched rules in the order in which they were launched, said sequence representing the inference path. According to a preferred embodiment, the computer-executed instructions, when executed, also instruct the one or more processors to filter the formed sequence of rules so that it contains only those rules the launching of which was directly involved in finding the required parameters. The filtering is preferably performed by the method described above.

According to one more aspect of the invention, there is provided a computer-readable medium storing computer-executable instructions which, when executed, instruct a computer to execute the aforementioned method of automated construction of an inference path in a knowledge base.

The technical effect to be achieved by the present invention relates at least to the improved speed and quality of knowledge processing (in particular, to more rapid construction of an inference path with subsequent optimization thereof), thereby further expanding the functionality of inference techniques.

List of Drawings

The aforementioned and other aspects and advantages of the present invention are disclosed in the following detailed description with reference to the drawings, in which:

Fig. 1 is a diagram of a three-dimensional representation of data according to the present approach;
Fig. 2 is an oriented bipartite graph of representation of a mivar net;
Fig. 3 is a logical flowchart of a method of constructing an inference path according to the present invention;
Fig. 4 is an example of a triangle and a bipartite graph with respect thereto in accordance with the present approach;
Fig. 5 is a logical flowchart of a method for optimizing the constructed inference path according to a preferred embodiment;
Fig. 6a,b,c shows examples of forks for illustration of the method according to Fig. 5;
Fig. 7 illustrates a test interface for the subject domain "Geometry. Solving of 'Triangle' problems" according to an embodiment of the present invention;
Fig. 8 illustrates a test interface according to Fig. 7, with entered input data and obtained results;
Fig. 9 illustrates an example of the computation result in the test interface for the subject domain "Diagnosis by symptoms" according to an embodiment of the present invention.

Detailed Description of the Invention

The present mivar approach is generally based on evolutionary data and knowledge bases. Important advantages of the mivar approach include the linear matrix method of searching for an inference path on an adaptive net of rules and the evolutionary mivar space enabling parallel data processing.

The mivar space represents a set of axes, a set of elements of the axes, a set of points of the space, and a set of values. Let us introduce $A = \{a_n\}$, n = 1 ... N, where A is a set of mivar space axis names, N is a number of mivar space axes. Then,

$$\forall \alpha_n \exists F_n = \{f_{ni}\}, \; n = 1 \ldots N, \; i_n = 1 \ldots I_n \; (1)$$

where $F_n$ is a set of elements of axis $\alpha_n$, $i_n$ is an identifier of an element of set $F_n$, $I_n = |F_n|$. Sets $F_n$ constitute a multidimensional space: $M = F_1 \times F_2 \times ... \times F_n$. $m = (i_1, i_2,..., i_N)$, $m \in M$, m is a point of the multidimensional space, $(i_1, i_2,..., i_N)$ are coordinates of point m.

There is a set of values of points of multidimensional space M:

$$C_M = \{c_{i1}, c_{i2} \ldots i_N | i_1 = 1 \ldots I_2, \ldots, i_n = 1 \ldots I_N\},$$

where $c_{i1, i2,...,i_N}$ is a value of a point of multidimensional space M with coordinates $(i_1, i_2, ... i_N)$. For every point of space M there is a single value from $C_M$ set or there is no such a value. Thus, $C_M$ is a set of state changes of a data model represented in the multidimensional space. To implement a transition between the multidimensional space and the set of points, relation $\mu$ is introduced: $C_x = \mu(M_x)$, where $M_x \subseteq M$, $M_x = F_{1x} \times F_2 \times... \times F_{Nx}$.

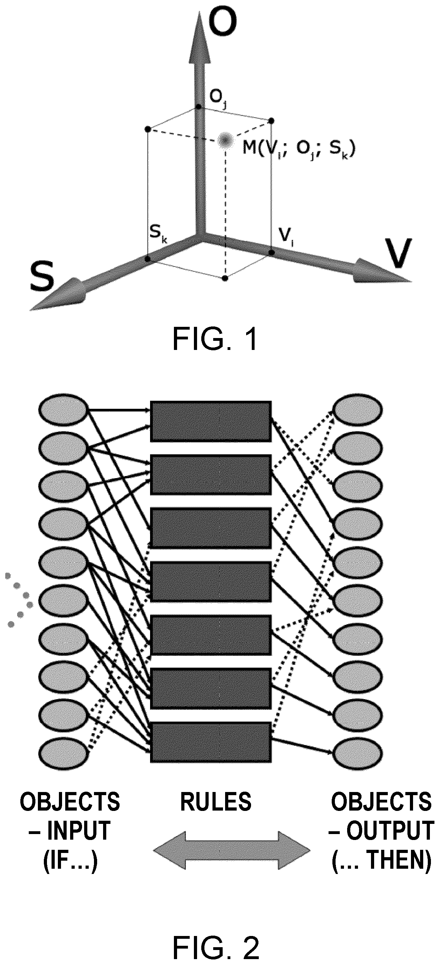

To describe a data model in the mivar information space, it is necessary to identify three axes: an axis of relations "O", an axis of features (properties) "S", and an axis of subject domain elements (objects) "V" (see Fig. 1). These sets are independent. The mivar space can be expressed by the following tuple:

$$<V, S, O> \qquad (2)$$

In the multidimensional space, each value of a relation attribute corresponds to a point having certain coordinates. Relations link elements of the space. A set of all points of the multidimensional space corresponds to the data model. In the mivar approach, a structure of the data model is defined by points of the space that store respective values of relation attributes. The mivar net can be represented in the form of a bipartite graph.

One of the basic concepts of the proposed mivar approach is the concept of the mivar net (MN). Generally, the mivar net provides formalization and representation of human knowledge in the form of a linked multidimensional space. More specifically, the MN is a way of representing, in the form of an oriented bipartite graph, a piece of mivar space information that is formed by objects and links between them, which in total represent the data model of a subject domain, and the links include rules for processing the objects. In other words, the MN of the subject domain is part of mivar space knowledge on this domain. The oriented bipartite graph consists of objects (P) and rules (R) (see Fig. 2), where P is V from the mivar space, and R is O. The bipartite graph of the mivar net can be represented as a two-dimensional matrix P x R as follows:

1. the net consists of two types of elements (two graph bipartitions): graph vertexes - objects (P) and graph edges - rules (R) (see Fig. 2);
2. for each variable P, information is explicitly stored on all rules R for which the variable is an input (X) or output (Y) variable, with clear indication of this fact;
3. for each rule R, information is explicitly stored on all its input and output variables P, including also information on the number of input (X) and output (Y) variables;
4. storage of all necessary information of the net is organized on the basis of database technologies adapted for operation with the mivar information space;
5. in each element of the mivar net, whether it is a vertex or an edge, all adjacent edges and vertices are unambiguously and fully defined. In any location of the mivar net it is always known where one can come to said location from and whereto one can proceed from said location, thereby avoiding the use of exhaustive searches when searching for an inference path on the mivar net. This is a direct consequence of the fact that the MN is represented as an oriented bipartite graph.

In other words, the MN is a special way of formalization and presentation of information in the form of two or more types of sets which are then linked between themselves. A set of the first type is "Object". A set of the second type is "Rules". Rudely speaking, "Object" is something that answers the question "who?", "what?". "Object" can be real (e.g., person, object, location) and abstract (e.g., event, buyer's account, studied training course). Granularity depends on requirements of a subject domain under analysis. "Rules" is a formalized converter or indicator of knowledge. "Rules" generally consists of a set of inputs, a set of outputs, and an internal algorithm for processing input data into output data. "Rules", for example, can be mathematical formulae, production rules "IF-THEN", indicators of a type of link between two objects, entire services.

Even these two sets enable to build an oriented bipartite graph by linking sets of different types: "object-rule" and "rule-object". Links of type "object-object" and "rule-rule" are forbidden. A link generally looks like: "object(s)-rule-object(s)". An element from which the link originates is indicated first. An element to which the link arrives is indicated second. This enables to provide orientedness of the graph and exclude the possibility of misinterpretation or conversion of objects through backward pass along the link.

Having such an arrangement, the MN is scalable, because at any time it is possible to add elements of sets of any available types, without the necessity to modify methods of processing them.

One of the key features of the MN is that it can be described without involvement of an expert. In most cases it is sufficient to transition objectively existing objects and links (rules) to the mivar form.

Another key concept of the present mivar approach is the concept of a mivar inference machine (MLIM). In general, the MLIM is a data processing module configured to at least receive a search query, determine available input objects and required output objects, construct an inference path based on a linear matrix method, convert it into an algorithm, and perform computations.

An example of the method of mivar search for an inference path will be considered below for illustration.

In information technologies, classical search of an inference path on a net of rules is related to the class of NP-complete problems. This invention applies a different approach, and, as previously stated, it relies substantially on building a matrix or graph for the MN. As the same search method is implied in the matrix and in the graph, the following description will be based on a matrix example.

Table 1

| V | MC in the form of matrix | | | | | | | | | |
|---|---|---|---|---|---|---|---|---|---|---|
| | 1 | 2 | 3 | 4 | 5 | ... | n-2 | n-1 | n | n+1 |
| 1 | x | x | x | | | | | y | y | |
| 2 | | | x | y | y | | | x | x | |
| ... | | | | | | | | | | |
| m | | x | | x | x | | y | | | |
| m+1 | | | | | | | | | | |

Assume that m rules and n parameters (contained in the rules as input variables or as resulting, i.e. output, variables) are known. Then, all links between the rules and the parameters can be represented in matrix V (m x n), each row of the matrix corresponding to a rule and containing information about variables used in this rule. In each row, all input variables of the rule are marked with symbol x in respective positions of the matrix, all output variables are marked with symbol y, all parameters that have already obtained a specific value in the process of inferencing or specifying initial data are marked with symbol z, and all required (output) parameters, i.e. those that should be "inferred" from the initial (input) data are marked with symbol w. In addition, let's add one more row and one more column to matrix V to store service information therein. Recall that the amount of service information may vary for various specific implementations. We have matrix V of size (m+1) x (n+1) in which the entire structure of the original net of rules is reflected. Just note that the structure of this logical net can change at any moment of time, i.e. this is the net of rules with a changeable (evolutionary) structure. An example of such matrix is shown in Table 1, above.

The following actions are performed with respect to the matrix of the MN to search a logic inference path.

a) In row (m+1) all known parameters are marked with z, and all required parameters - with w. For example, in Table 2, positions 1, 2, 3 in row (m+1) are marked with z, and position (n-2) - with w.

Table 2

| MN matrix with indicated known and required parameter | | | | | | | | | | |
|---|---|---|---|---|---|---|---|---|---|---|
| V | 1 | 2 | 3 | 4 | 5 | ... | n-2 | n-1 | n | n+1 |
| 1 | x | x | x | | | | | y | y | |
| 2 | | | x | y | y | | | x | x | |
| ... | | | | | | ... | | | | |
| m | | x | | x | x | | y | | | |
| m+1 | z | z | z | | | | w | | | |

b) Search for rules that can be activated (i.e. those having all input variables known) is performed successively, e.g. from top to bottom. If there are no such rules, a logic interference path doesn't exist, and more precise definition (addition) of input data should be requested. If there are rules that can be activated, then, for each of them, a mark indicating the rule can launched is made in a respective place of the service row. For example, it is possible to set '1' in these positions of matrix V, as shown in Table 3, in cell (1, n+1).

Table 3

| Determining whether rule 1 can be launched | | | | | | | | | | |
|---|---|---|---|---|---|---|---|---|---|---|
| V | 1 | 2 | 3 | 4 | 5 | ... | n-2 | n-1 | n | n+1 |
| 1 | x | x | x | | | | | y | y | 1 |
| 2 | | | x | y | y | | | x | x | |
| ... | | | | | | ... | | | | |
| m | | x | | x | x | | y | | | |
| m+1 | z | z | z | | | | w | | | |

c) If there is a plurality of such rules, then a selection is performed, according to predefined criteria, of such rule or rules which are to be activated first. Several rules can be launched at a time, provided sufficient resources are available.

d) Simulation of launching a rule is accomplished by assigning values "known" to output variables of this rule (z in our example). For ease of further process, the launched rule is additionally marked with numeral '2' (optionally).

e) After simulating the launch of rules, analysis of achievement of the goal is performed, i.e. it is analyzed whether the required values have been obtained by comparing service symbols in the service row. If at least one value "required" (i.e. w) remains in the service row, the search of the logic inference path is continued. Otherwise, the problem is considered as successfully solved, and all the involved rules, in the order in which they were launched, form the required logic inference path.

f) First, it is determined whether there are rules that can be launched after new values in the preceding step have been determined. If there are no such rules, a logic inference path doesn't exist and the following actions are the same as in step b of the present method. If there are such rules, the search of the inference path is continued. '1' has appeared in cell (2, n+1) to indicate that the rule can be launched (see Table 4).

Table 4

| Determining whether rule 2 can be launched | | | | | | | | | | |
|---|---|---|---|---|---|---|---|---|---|---|
| V | 1 | 2 | 3 | 4 | 5 | ... | n-2 | n-1 | n | n+1 |
| 1 | x | x | x | | | | | y | y | 2 |
| 2 | | | X | y | y | | | x | x | 1 |
| ... | | | | | | ... | | | | |
| m | | x | | x | x | | y | | | |
| m+1 | z | z | Z | | | | w | z | z | |

g) The next step, again similar to step d, simulates launching the rules, and then, as in steps e and f, all the required actions are repeated until the result is obtained. If necessary, steps b to g can be repeated until the result is achieved. The result can be both positive - a logic inference path exists, and negative - there is no logic inference path because of uncertainty of input data. For illustration, let us continue the stepwise execution of our example. So, in our example, it is necessary to simulate launching rule 2.

Table 5

| V | 1 | 2 | 3 | 4 | 5 | ... | n-2 | n-1 | n | n+1 |
|---|---|---|---|---|---|-----|-----|-----|---|-----|
| Result of simulation of launching rule 2 | | | | | | | | | | |
| 1 | x | x | x | | | | | y | y | 2 |
| 2 | | | x | y | Y | | | x | x | 2 |
| ... | | | | | | | | | | |
| m | | x | | x | X | | y | | | |
| m+1 | z | z | z | z | z | | w | z | z | |

i) As can be seen from Table 5, we have an indication in cells (m+1, 4) and (m+1, 5) that parameters 4 and 5 can be derived, and in cell (2, n+1) an indication is generated that the rule has been already launched, i.e. numeral '2' is placed. After that, the service row is analyzed to reveal that not all required variables are known. Therefore, the processing of matrix V (m+1) x (n+1) is to be continued. Analysis of the matrix shows that rule m can be launched (see Table 6).

Table 6

| V | 1 | 2 | 3 | 4 | 5 | ... | n-2 | n-1 | n | n+1 |
|---|---|---|---|---|---|-----|-----|-----|---|-----|
| Determining whether rule m can be launched | | | | | | | | | | |
| 1 | x | x | x | | | | | y | y | 2 |
| 2 | | | x | y | y | | | x | x | 2 |
| ... | | | | | ... | | | | | |
| m | | x | | x | x | | y | | | 1 |
| m+1 | z | z | z | z | z | | w | z | z | |

j) Thus, no required rules remain in the service row, and new values have appeared in the cells of the Table: '2' in cell (m, n+1) and z instead of w in cell (m+1, n-2). So, the positive result is obtained, hence, the logic inference path exists with the specified initial values.

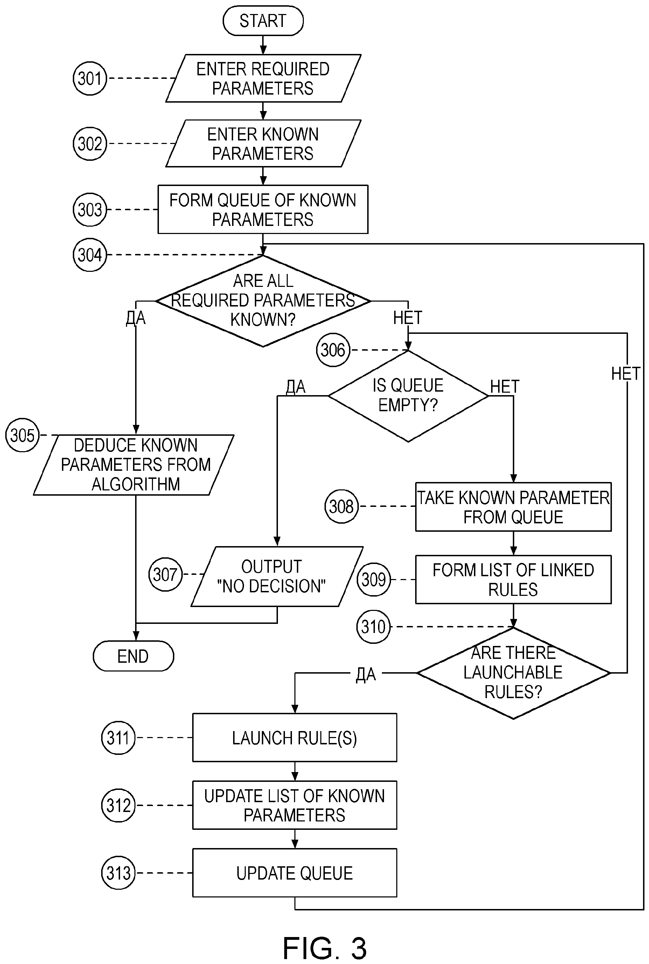

Further, a preferred embodiment of method 300 of constructing an inference path in a knowledge base using the present mivar approach will be described with reference to Fig. 3.

In steps 301 and 302, known parameters are entered and a list of required parameters is specified (for example, transferred or entered through a user interface). In step 303, a queue or stack is formed from the known parameters. Different types of queues (LIFO, FIFO, etc.) can be used, and only step 313 will change depending of the selected type.

In step 304, a check is performed on whether all the required parameters are already known. This check not only allows to terminate the search when all the required parameters become known, but also allows to avoid launching the search of an algorithm if the required variables have been also communicated in the list of known parameters.

If the result of step 304 is TRUE, then, in step 305, the found values and the algorithm constituting the inference path are output. If the result of step 304 is FALSE, then a check is run in step 306.

In step 306, it is checked whether the queue of known parameters is empty, i.e. it still contains unprocessed parameters. If the result of step 306 is TRUE, then step 307 is called. Depending on a particular embodiment and purpose, step 307 can output (for example, on a display screen) both a mere "no solution" and a list of required parameters which were found, along with an algorithm corresponding thereto, as well as a list of unfound parameters.

If the result of step 306 is FALSE, then one known parameter is retrieved from the queue of parameters in step 308. In step 309, rules associated with the parameter are obtained; particularly, the rules are identified in which the known parameter is an input variable. The identified rules can be arranged in a list. In step 310, it is checked whether any rules from the list of identified rules can be launched. Only those rules can be launched in which all input variables are known and which have not been launched before. If there are no such rules, the process returns to step 306, and steps 308, 309, 310 are repeated.

If the result of step 310 is TRUE, the rules are launched in step 311, and, based on their output variables, in step 312 the list of known parameters and their values is updated, and in step 313 the parameters found in step 311 are entered into the queue of known parameters. Then, the process returns to step 304, and the respective check is executed.

As a result, a sequence of the launched rules is formed in the order in which they were launched (for example, a list), the sequence, in accordance with the aforesaid, representing the built inference path.

This technique of searching for an inference path enables to avoid the exhaustive search through all possible rules in each step, and, thus, depart from the NP-complete problem towards the linear level of complexity.

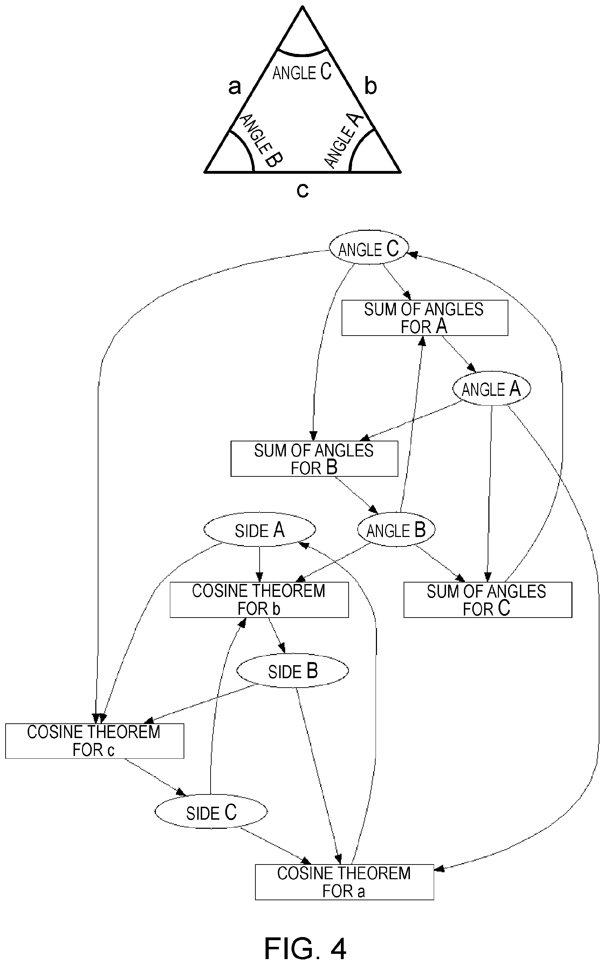

As mentioned above, the MN can be represented as an oriented bipartite graph. Fig. 4 shows schematically a triangle and a possible bipartite graph with respect thereto. Parameters are shown in ellipses, and rules - in rectangles. This graph clearly shows that objects store information on rules which the objects are linked with (arrows in the graph) and their role in these rules (direction of arrows), and rules store information regarding objects which the rules are linked with (arrows in the graph). In specific embodiments, such relationships can be implemented through various kinds of lists. For example, the description of parameter "Side a" may contain:

- a list of rules in which "Side a" participates as an input variable. Such rules in this example are "cosine theorem for b", "theorem of cosines for c";
- a list of rules in which "Side a" is an output variable ("theorem of cosines for a");
- a union of the previous lists.

Similar information is contained in rules in the lists of their input and output variables.

This architecture allows to reduce the number of searches through rules in each iteration of logical search on the mivar matrix (steps 309 and 310 in Fig. 3), since only rules are looped that are linked with a selected object (parameter) rather than all the rules.

However, there may be situations when extra steps are added in the course of searching for an algorithm constituting an inference path. An example will be discussed below with reference to Tables 7a-7b.

Table 7a shows an initial state of the system. Parameter P1 is known, and P4 is to be found. In the first step, rules R1 and R2 can be launched to find P2 and P3, respectively, and this is done in Table 7b. Then, it remains only to launch rule R3 and derive P4 (see Table 7c).

Table 7a

| Initial state | | | | | |
|---|---|---|---|---|---|
| Rule/Parameter | P1 | P2 | P3 | P4 | N+1 |
| R1 | x | y | | | |
| R2 | x | | y | | |
| R3 | | x | | y | |
| M+1 | z | | | w | |

Table 7b

| State after first pass | | | | | |
|---|---|---|---|---|---|
| Rule/Parameter | P1 | P2 | P3 | P4 | N+1 |
| R1 | x | y | | | 2 |
| R2 | x | | y | | 2 |
| R3 | | x | | y | |
| M+1 | z | z | z | w | |

Table 7c

| Result | | | | | |
|---|---|---|---|---|---|
| Rule/Parameter | P1 | P2 | P3 | P4 | N+1 |
| R1 | x | y | | | 2 |
| R2 | x | | y | | 2 |
| R3 | | x | | y | 2 |
| M+1 | z | z | z | z | |

As a result, we launched rules R1, R2, and R3. But, upon closer look at the net, it will become obvious that the launch of rule R2 was not needed to compute P4.

Such superfluous steps can increase computation time. To further accelerate computation and create more accurate precedents, the above approach can be enhanced by removing all unnecessary computation steps in order to optimize the resulting inference path.

To this this end, in execution of the method of building an inference path, as described above with reference to Fig. 3, each found parameter is recorded with information on a rule which was launched to find it, and each rule is supplemented with information on a parameter which initiated the launch of the rule, acting as its input variable (i.e. an initiator parameter). Parameters found in the process of execution are arranged in a list.

In accordance with the foregoing, for each parameter information is stored, preferably in the form of at least one list, about all rules for which the parameter is an input or output variable, and for each rule information is stored, again preferably in the form of at least one list, on all its input and output variables. Accordingly, implementation of such addition/record of information will be obvious to a skilled artisan, for example, by using conventional programming techniques and frameworks.

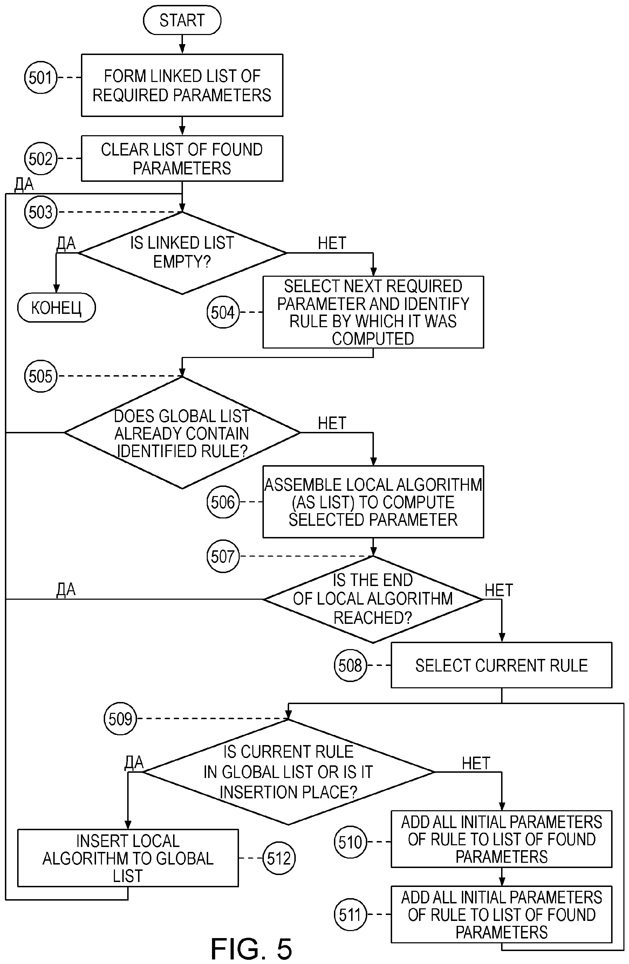

Operations of filtering the inference path are shown as a flowchart of method 500 in Fig. 5.

In step 501, a list of required parameters is generated. Specific embodiments allow to use linked lists, because the speed of insertion thereinto is higher than the speed of insertion into other data storage structures. Then, in step 502, the list of found parameters is cleared, because during the execution of the basic method 300, parameters the computation of which was unnecessary for the final path (algorithm) could get into said list (see Fig. 3).

In step 503, it is checked whether the linked list of required parameters is empty. If the result of step 503 is TRUE, the execution of method 500 is completed. If the result of step 503 is FALSE, step 504 is invoked.

In step 504, a parameter is taken out from the list of required parameters, and a rule by which the parameter was directly computed is identified. In step 505, it is checked whether the identified rule is added to a global sequence (for example, a list) of rules being generated.

If the result of step 505 is FALSE, the process goes to step 506 to form a local sequence of rules, also referred to herein as "local algorithm", from the rules involved in determining the selected required parameter. The formation begins from adding the rule identified for the analyzed required parameter in step 504 to the local algorithm and identifying its initiator parameter.

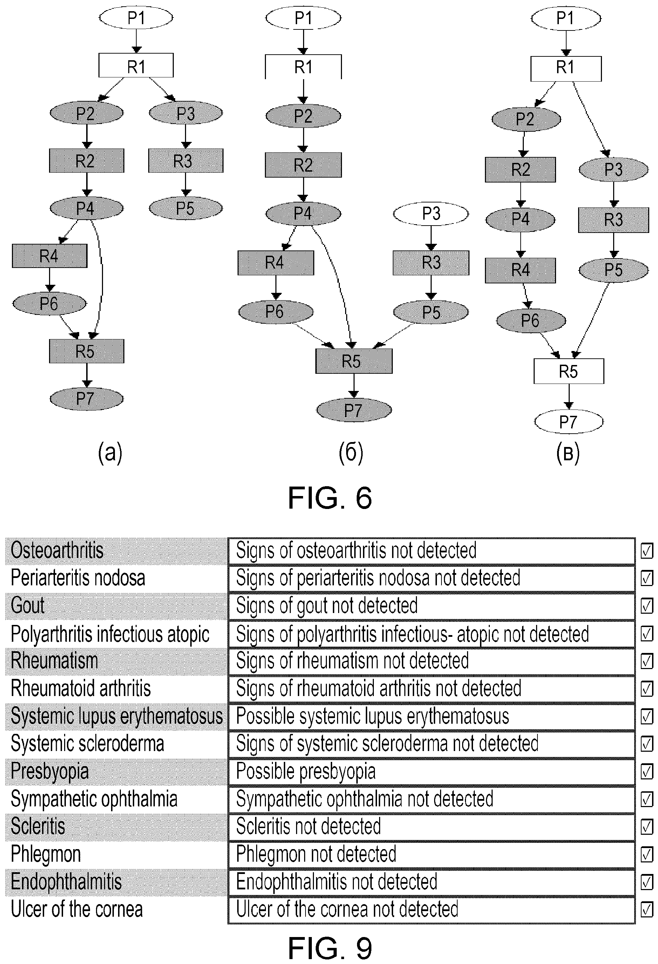

The local algorithm is substantially a list of transitions from a required parameter to known parameters. A format of recording the local algorithm may vary depending on implementation. For example, in the case with P5 in Fig. 6a the local algorithm can be presented as: P5<-R3, R3<-P3, P3<-R1, R1<-P1, where '<-' indicates direction of a transition. As mentioned repeatedly above, vertices of the bipartite graph (parameters) "know" their incoming and outgoing links (rules), and rules, in turn, "know" their own input and output parameters, so a shorter record of the local algorithm in the form of a string of rules is allowed, for example, R3, R1.

As can be seen from the given record of the local algorithm and Fig. 6b, there are situations when a rule has more than one input (i.e. input variable), therefore, there are parameters the information on which will not be stored in the list of transitions that is being generated. These parameters are entered to the beginning of the list of required parameters so that an own local algorithm is built subsequently for each of them.

In said addition of a parameter into the list of required parameters the system also stores a place of insertion of a local algorithm of the parameter into the global sequence of rules, in order to prevent disturbance of the global sequence of rules. In general, the insertion place is an indication of a rule prior to which the local algorithm is to be inserted into the global sequence of rules being formed.

While building the algorithm, two classes of situations may arise, as shown in Fig. 6a, b. The first class is referred to herein as "branch" ("branch down" in Fig. 6a, "branch up" in Fig. 6b). As can be seen from Fig. 6a, upon performing search of P7 and P5, we obtain two different branches of the algorithm. In this case, R5 will not be launched and will not get into the algorithm, unless P6 is known. Upon reaching R5, P4 will be added to the list of required parameters with the insertion place indication 'before R5'. It is worth noting herein that P4 is encountered in the local algorithm of calculating P6 and will be removed from the list of required parameters.

In the "branch up" situation, in order to calculate P7, it is required to calculate first from P1 to P4, from P4 to P6, and from P3 to P5. Here the insertion place is R5, the algorithms of computation of P5, P6, and P4 should be inserted before this rule.

Fig. 6c shows a "cyclic" situation. Our algorithm temporarily splits and then converges again, since both P6 and P5 are needed to find P7. The insertion place is again 'before R5'.

A stepwise example of applying an insertion place will be discussed in more detail below, after the description of method 500 in Fig. 5.

In step 507, it is checked whether the end of the local algorithm (i.e. a known parameter) has been reached. If the result of step 507 is TRUE, the process goes to step 503. If the result of step 507 is FALSE, the process goes to step 508.

In step 508, a rule is chosen from the sequence of rules formed based on the results of the method 300 in Fig. 3, an output variable of the rule being is the initiator parameter of the rule added last to the generated local algorithm. Further on, in the description of steps of the method 500 the selected rule is referred to as "current rule". Then, in step 509, it is checked whether the current rule is present in the generated global sequence of rules, as in the case with R1 in the example above, or whether the rule is an insertion place. If the result of step 509 is TRUE, then the process moves to step 512. If the result of step 509 is FALSE, the process moves to step 510.

In step 510, all output parameters of the current rule are added to the list of found parameters, and they are certainly checked for duplication. At the same time, the list of required parameters is checked for the presence of these parameters, and, in the case of match, they are removed from the list of required parameters. We have seen a similar example in the discussion of Fig. 6a, where P4 was encountered in the local algorithm of P6 and was removed from the list of required parameters.

In step 511, the current rule is added to the end of the local algorithm being formed, and the process goes to step 507.

In step 512, if the insertion place into the global sequence of rules has been determined for the analyzed required parameter, the generated local algorithm is inserted into this insertion place; otherwise, the local algorithm is added to the end of the global sequence of rules being formed. From step 512 the process moves to step 503.

The generated global sequence of rules represents the optimized inference path.

The described method enables to clear the total algorithm of solving a problem from superfluous steps and to launch only the rules necessary to solve the problem, thereby enabling to accelerate operation of the entire inventive inference, especially on large problems.

Now let us consider the situation in Fig. 6b more closely. Initially, the list of required parameters contains only P7. This parameter stores information indicating that it was computed in rule R5. In R5 it is known that it has three inputs: P4, P5 and P6, and let us assume that P4 is the initiator parameter of rule R5 in the algorithm. Therefore, the remaining inputs P6 and P5 are added to the beginning of the list of known parameters. R5 is indicated as the insertion place of their local algorithms. The next local algorithm comprises P4<-R2, R2<-P2, P2<-R1, R1<-P1. The full list of local transitions for P7 is as follows: P7<-R5, R5<-P4, P4<-R2, R2<-P2, P2<-R1, R1<-P1. We enter only the string of rules into the global sequence and obtain: R5<-R2<-R1.

Now let's build the local algorithm of P6. In general, it can be written as follows: P6<-R4, R4<-P4, P4<-R2, R2<-P2, P2<-R1, R1<-P1. Take rule R4. It has only one input, so we add nothing to the list of required parameters. R5 is the insertion place for P6; therefore, R4 is placed above it. In this step, the global sequence looks as follows: R5<-R4<-R2<-R1. Now take rule R2. It is already present in the global sequence, therefore, the whole remaining part of the local algorithm is already contained in it, and there is no sense to waste time for unnecessary checks.

We retrieve P5 from the list of required parameters. Its local algorithm is quite short: P5<-R3, R3<-P3. Take R3. It is absent in the global sequence of rules, the insertion place is above R5. The result is: R5<-R3<-R4<-R2<-R1.

The following is the description of structural development of the mivar approach.

In further development of the present approach towards representation of data, objects have been divided into parameters and classes, links - into relations and rules, and a new entity - restriction - has been introduced.

The basic mivar matrix approach, described above, involves operation with flat models of subject domains, where all parameters are peers. However, much around us has hierarchical links. For example, a division consists of troops, an institute consists of faculties, and those, in turn, consist of departments and so on. Oftentimes, these hierarchical links contain additional information which cannot be neglected. For example, they allow to distinguish the one object from the other, to say that in this family the father's name is Gennady and in the other - Vyacheslav. In order to implement such relationships in the mivar space and mivar net, it has been decided to split the previously existing element "object" into parameters and classes.

Parameter is a single object, finite at a given level of abstraction, which has a value. An example is the length of side AB of triangle ABC. Parameter is a leaf in the hierarchy tree of elements in the model. A parameter can be linked with one internal node (class) only.

Class is an internal node in the hierarchy tree. Class has no value and may contain other internal nodes (other classes) and/or leaves ("parameters"). For example, a class can refer to "triangle" which will store in itself parameters of sides and angles. Also, class can refer to "division" which can store in itself not only native parameters (name, accountable strength, locations, etc.), but also other classes, for example, troops. The introduction of classes enables to simplify description of a model comprising several objects of the same type. It is not necessary to enter all over again or to search for parameters which are dispersed throughout the model. It is sufficient to simply copy and insert a new instance. Another distinction between class and parameter is that a class can contain a list of internal rules of the class.

Internal rule of class is the rule invoking only parameters that are child parameters in this class. For example, "Angle C = 180 - angle A - Angle B" will be an internal rule for triangle, since all these angles are child parameters of class 'triangle'. Introduction of internal rules of class can simplify pattern-based creation of similar objects, since internal rules will be automatically generated for a new instance of the class. Except for that, they do not differ from simple rules.

Relation is an updated element of the mivar space. Relation describes a relationship between abstract variables. For example, "a=b-c" is the abstract formula of subtraction. The relation stores its type, a list of input variables and a list of output variables, types of variables used, and description. Relations can be:

1. mathematical. An example may be a simple formula like "a=b-c";
2. conditional. For example, "If y equals 10, then x equals 14, otherwise x equals 7";
3. programmable. An example is a program code with its inputs and outputs;
4. string. For example, "loves", "connected";
5. system. For example, "whole-part";
6. location. For example, "above", "to the right", etc.

Rule comprises a reference to a relation and links particular objects from the model. This is done to simplify the description of subject domains and multiple reuses of the same, even complex, programmable properties. For example, we have a mathematical relation with formula "a=b-c". It may mean both the balance on an account after payment of something, and how many apples left, if there had been 10 apples and we gave one. Rules contain at least one of:

1. a list of input variables;
2. a list of output variables;
3. a relation identifier.

Restriction is a new element of the mivar space. As follows from its name, this element imposes constrains on values of parameters. For example, one of the angles in a right triangle is always 90°, or some parameter in computations must be always greater than 0. Restrictions are similar in structure to rules. They also have a reference to a relation that is obligatory conditional and has the form "If (condition), THEN true, OTHERWISE false", and are linked to parameters of a specific model. The difference is that:

1. they have only inputs, and the output is a Boolean variable;
2. when triggered, they stop computation of the model and output an error message.

The mechanism of restrictions allows to communicate information about the real world more accurately and track its changes. Owing to restrictions it is possible to warn about some abnormal situations in the Automated Process Control System or to notify of incorrectly prepared initial data.

Precedent is a case or event that occurred in the past and serves as an example or reason for similar actions at present. The mivar approach is able not only to save previously computed algorithms, but also build precedents based thereon as a separate rule which unites all unique inputs in the rules within this local algorithm and part, last, or all outputs from them (depending on an embodiment). Precedent in the mivar approach is a special entry of a previously computed algorithm having a length of more than one step, the entry enabling to considering the precedent as a new rule of the mivar approach. Each step of the algorithm comprises:

1. a list of input parameters;
2. information on a launched rule;
3. a list of output rules.

Furthermore, parameters that are outputs of previous steps can be provided, and are frequently provided, to the input of a subsequent step. Such input parameters are called "computed". If a parameter is provided to the input that is not the output of one of the previous steps, then the parameter is called "unique".

Similarly to rule, precedent comprises:

1. a list of input parameters;
2. a list of output parameters;
3. a relation identifier.

For proper operation of a precedent, it should be ensured that all "unique" input parameters will be provided to the input of the precedent, because the computation algorithm embedded in the precedent cannot be executed without them.

As to the list of output parameters of the precedent, it may be formed in one of the following ways:

1. only output parameters of the last step of the algorithm. It is applicable for algorithms, where parameters computed in the last step were indicated as required parameters;
2. only parameters marked as "required", when computing the algorithm according to which the precedent is being created;
3. all parameters that are output parameters of steps of the algorithm inside the precedent.

Relation identifier can refer to:

1. a separately stored algorithm;
2. a relation which unites all steps of the algorithm by which the precedent has been created.

Unique inputs to rules refer to inputs that are not an output of a rule inside a local algorithm. For example, Fig. 6a is indicative of only one unique input, P1. A successive and total relation of all relations included in the local algorithm will be written as a relation of this rule. Formation of a precedent rule, which does not differ from ordinary rules in structure, allows them to be used along with other rules while inferencing. In other words, precedents can be processed in the same place and algorithm as normal rules. For some problems it is admissible to use them separately.

The disclosed methods are implemented in practice on the basis of well-known computer and network technologies and programming techniques. For example, there can be used one or more computers which contain standard hardware components, such as a processor, various types of storage devices (memory, caches of various levels, hard disks, etc.), network adapters, display devices, input/output devices, etc., hardware and software components such as BIOS, and software components such as an operating system, drivers, various kernel APIs and libraries; the computer(s) is configured based on conventional programming techniques (for example, one of conventional implementations of object-oriented programming) to perform the methods according to the present invention. For example, a software package may be developed from software code means that is installed onto the computer(s), in particular, by copying it on computer-readable media being part of the computer(s). Program code package means, when read and executed by a processor or processors included in the computer(s), cause the computer(s) to perform steps of the above-described methods according to the present invention. In fact, the computer device configured in this way can be construed as a tangible implementation of the MLIM according to the present invention. A combined hardware-software implementation of the MLIM in the form of a properly configured blade server is also admissible (for example, by "hardwiring" carried out by one of the known technologies).

An example is described hereinbelow to illustrate how the mivar approach can be used in subject domain "Geometry. Solving 'Triangle' problems".

In the description of subject domain "Geometry. Solving problems regarding subject 'Triangle'", the list of variables comprises all kinds of sides, segments, angles, etc. Various relationships between those variables act as relations and rules: various theorems, axioms, etc. By the time the test had been written, the subject domain consisted of 69 parameters, 51 relations, and 223 rules.

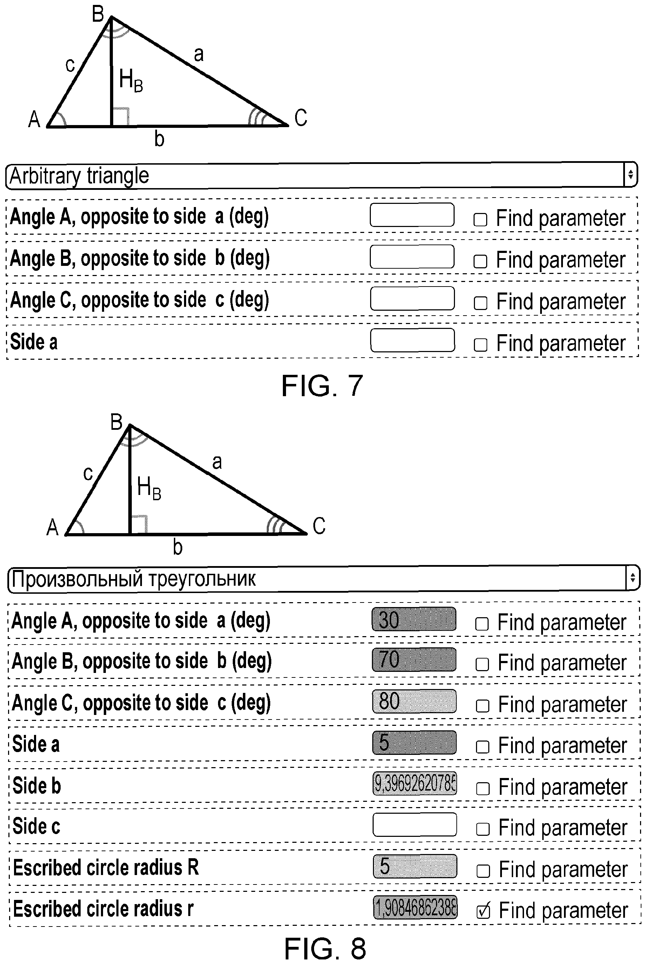

A user is enabled to assign desired known values to variables and to mark required parameters, for example, through a graphical user interface (GUI) on the display an illustrative example of which is shown in Fig. 7.

Let us give a simple example of solving a problem. First, it is discussed how it is all done in the test interface of Fig. 8, then steps of inference on the matrix are briefly described.

For illustration, the following parameters have been entered into the interface (see Fig. 8):

- angle A = 30°,
- Angle B = 10°,
- side a = 5 cm.

The following parameters have been identified for search:

- radius r of inscribed circle,
- height Ha dropped from angle A onto side a.

As a result, inputted values, values found in the course of solution, but not requested initially, and found values are added to the table of inference.

Furthermore, all actions executed to select rules for computing, messages on involving new required parameters into the computation, messages about found values of parameters are displayed in textual form, as shown by way of example in Table 8.

Table 8

| Example of computing algorithm according to the example under analysis | | |
|---|---|---|
| Name of rule | Input values | Output values |
| Sum of angles in triangle is 180 degrees; find Angle C | 1. Angle A opposite to side a (degrees) <br> 2. Angle B opposite to side b (degrees) | 1. Angle C opposite to side c (degrees) |
| Theorem Sin() for side b | 1. Side a <br> 2. Angle B opposite to side b (degrees) <br> 3. Angle A opposite to side a (degrees) | 1 .Side b |
| Theorem Sin() for radius R of escribed circle | 1. Side a <br> 2. Angle A opposite to side a (degrees) | 1.Radius R of escribed circle |
| Sin() of angles and circle, for radius of inscribed circle | 1. Radius R of escribed circle <br> 2. Angle A opposite to side a (degrees) <br> 3. Angle B opposite to side b (degrees) <br> 4. Angle C opposite to side c (degrees) | 1. Radius r of inscribed circle |
| Height Ha, with known Angle C | 1. Side b <br> 2. Angle C opposite to side c (degrees) | 1.Height Ha dropped from Angle A onto side a |

Now let us consider this example in more detail. As mentioned above, this subject domain consists of 69 parameters and 223 rules. It is not possible to represent such a matrix on paper, therefore, let us confine ourselves only to its part which is of interest for us.

Based on the description of the mivar net, the matrix consists of parameters and rules. In our case, the parameters are sides, angles, heights, etc. The rules are relationships, algorithms for computing certain quantities, for example, sine theorem, cosine theorem, computation of inscribed circle radius, etc. Thus, the following matrix is obtained.

Table 9

| Rule/Parameter | Angle A | Angle B | Angle C | Height $H_a$ | Side a | Side b | Side c | Escribed circle radius R | Inscribed circle radius r | n+1 |
|---|---|---|---|---|---|---|---|---|---|---|
| Initial state of mivar matrix part | | | | | | | | | | |
| Sum of angles of triangle | x | x | y | | | | | | | |

(continued)

| Rule/Parameter | Angle A | Angle B | Angle C | Height $H_a$ | Side a | Side b | Side c | Escribed circle radius R | Inscribed circle radius r | n+1 |
|---|---|---|---|---|---|---|---|---|---|---|
| Theorem Sin() for side b | x | x | | | x | y | | | | |
| Theorem cos() for Side c | | | | | | | | | | |
| | | | | | | | | | | |
| Theorem Sin() for escribed circle radius | x | | | | x | | | y | | |
| Sin() of angles and circles for inscribed circle radius | x | x | x | | | | | | y | |
| Height Ha, with known Angle C | | | x | y | | x | | | | |
| M+1 | z | z | | w | z | | | | w | |

Initial state of mivar matrix part

As follows from the matrix above, 3 rules can be launched at a time in the first step: Sum of angles triangle', 'Theorem Sin() for side b', and 'Theorem Sin() for inscribed circle radius'. As there are no restrictions regarding the order in the subject domain, all these rules are marked as launched, and '2' is placed into the service column, and their outputs are marked in the service row as known. In this case, the matrix takes the following form.

Table 10

| Rule/Parameter | Angle A | Angle B | Angle C | Height $H_a$ | Side a | Side b | Side c | Escribed circle radius R | Inscribed circle radius r | n+1 |
|---|---|---|---|---|---|---|---|---|---|---|
| Sum of angles of triangle | x | x | y | | | | | | | 2 |
| Theorem Sin() for side b | x | x | | | x | y | | | | 2 |
| Theorem cos() for Side c | | | | | | | | | | |
| | | | | | | | | | | |
| Theorem Sin() for escribed circle radius | x | | | | x | | | y | | 2 |
| Sin() of angles and circle for inscribed circle radius | x | x | x | | | | | | y | |
| Height Ha, with known Angle C | | | x | y | | x | | | | |
| M+1 | z | z | z | w | z | z | | z | w | |

Matrix after first step

After the first step, additional parameters have become known, and now rules 'Height Ha, with known Angle C' and 'Sin() of angles and circle for inscribed circle radius' can be launched to find the required parameters. Let us "launch" these rules. Enter values. The problem is solved.

Table 11

| Rule/Parameter | Angle A | Angle B | Angle C | Height $H_a$ | Side a | Side b | Side c | Escribed circle radius R | Inscribed circle radius r | n+1 |
|---|---|---|---|---|---|---|---|---|---|---|
| Resulting matrix | | | | | | | | | | |
| Sum of angles of triangle | x | x | y | | | | | | | 2 |
| Theorem Sin() for side b | x | x | | | x | y | | | | 2 |
| Theorem cos() for Side c | | | | | | | | | | |
| | | | | | | | | | | |
| Theorem Sin() for escribed circle radius | x | | | | x | | | y | | 2 |
| Sin() of angles and circle for inscribed circle radius | x | x | x | | | | | | y | 2 |
| Height Ha, with known Angle C | | | x | y | | x | | | | 2 |
| M+1 | z | z | z | z | z | z | | z | z | |

The following is an example of using the mivar approach in subject domain "Diagnosis by symptoms".

A medical model of diagnosis by symptoms has been created on the basis of the mivar approach, and adapted to analyze observed symptoms and to produce the most relevant diagnosis.

The model of diagnosis by symptoms operates based on the principle of a smart medical handbook by indicating probable variants of disease diagnosis to a physician. As a result of the differential diagnosis, the physician obtains a list of diagnoses which are possible at the existence of the selected combination of symptoms.

The model is intended to be used by both practitioners and health-concerned people, and it can be also used as a tutorial means for diagnosis of diseases when training medical students.

The model comprises:

1. a list of symptoms divided, for easiness of search, into regions and systems;
2. a list of diseases also divided into basic groups;
3. analyses (a user can choose whether to take the results of analyses into account or ignore them).

Input data for the diagnosis-by-symptoms model are the symptoms that the user indicates himself; the user can also indicate results of analyses and choose whether to take them into account or not. Output data will be the diagnosis (diagnoses) issued by the system. Interaction is again performed through a dedicated GUI.

In analysis of input data, the model uses a mathematical formula that "mimics" the analytical conclusion of a physician when consulting a patient: it takes into account not single symptoms (like existing systems), but a group of symptoms that are typical and sufficient to establish this diagnosis.

$$\frac{\sum_i^n x_i}{n} + \frac{\sum_i^k y_i}{k} + \frac{\sum_i^r z_i}{r} = D + 1 * A$$

where:

$$\sum_i^n \frac{x_i}{n}$$ - symptoms obligatory for this disease;

$$\sum_j^k \frac{y_i}{k}$$ - symptoms optional for this disease;

A - mark of accounting results of analyses;

$$\frac{\sum_i^r z_i}{r}$$ - results of analyses specific to the particular disease;

D - established accuracy of selecting the diagnosis.

Let us assume that the user indicates a great number of symptoms:

1. temperature rise;
2. weakness;
3. headache;
4. pain in muscles and joints;
5. fatigue;
6. butterfly-shaped rash across cheeks;
7. vision problems;
8. personality change;
9. fever;
10. sleep disturbance;
11. arthritis of small joints;
12. discoloration of skin;
13. spotted rash.

The physician, having noticed the specific symptom "butterfly-shaped rash across cheeks", will immediately suspect systemic lupus, and may not identify retinopathy or drug disturbance of vision, or other more rare diseases that can be veiled by severe lupus, but the designed model will immediately output several diagnoses (see Fig. 9):

1. systemic lupus,
2. presbyopia,
which will help the physician to make a decision and timely direct the patient to ophthalmologist for examination.

The model checks all marked diagnoses, and currently performs the inference of 184 steps.

The following is an example of withdrawing the results:

Step No. 1
Description of rule: Systemic lupus erythematosus

Input parameters:

Coefficient value = 0;
Joint pain = 1;
Remittent fever = 1;
Sleep disorders = 1;
Arthritis of small joints = 1;
Skin pigmentation = 1;
Spotted rash = 1;
Decrease or lack of appetite = 1;
Butterfly-shaped rash = 1;

Formula in pseudo language:

```
var x, p1, p2, p3, p4, p5, p6, p7, p8, a1, a2, a3, a4;
if(x==1 && p1+p2+p3+p4+p5+p6+p7+p8>=6 && a1+a2+a3+a4==4)
 {
y = "Systemic lupus erythematosus is possible";
 }
else if(x==0 && p1+p2+p3+p4+p5+p6+p7+p8 >= 6)
 {
y = " Systemic lupus erythematosus is possible";
 }
else
 {
y = "No signs of systemic lupus erythematosus was identified";
 }
Result:
 Systemic lupus erythematosus = Systemic lupus erythematosus is possible;
```

Step No. 2

Description of rule: Presbyopia

Input parameters:

Reduced vision = 1;
Fatigue = 1;
Headache = 1;

Formula in pseudo language:

```
if (p1+p2+p3==3)
 {
y = "Presbyopia is possible";
 }
else
 {
y = " Presbyopia is not identified";
 }
```

Result:

Presbyopia = Presbyopia is possible;

To represent this computation as a matrix, let us assign an identifier to each symptom, as exemplified in Table 12 below.

Table 12

| Symptom or parameter | Identifier |
| --- | --- |
| Arthritis of small joints | P1 |
| Butterfly-shaped rash | P2 |
| Joint pain | P3 |
| Headache | P4 |
| Value of coefficient | P5 |
| Sleep disturbance | P6 |
| Skin pigmentation | P7 |
| Presbyopia | P8 |
| Spotted rash | P9 |
| Remittent fever | P10 |

(continued)

| Symptom or parameter | Identifier |
|---|---|
| Systemic lupus erythematosus | P11 |
| Decreased vision | P12 |
| Decrease or lack of appetite | P13 |
| Fatigue | P14 |

Then, the matrix shown in Table 13 is obtained.

Table 13

| | P1 | P2 | P3 | P4 | P5 | P6 | P7 | P8 | P9 | P10 | P11 | P12 | P13 | P14 | N+1 |
|---|---|---|---|---|---|---|---|---|---|---|---|---|---|---|---|
| R1 | x | x | x | | x | x | x | | x | x | y | | x | | |
| R2 | | | | x | | | | y | | | | x | | x | |
| M+1 | | | | | | | | | | | | | | | |

As seen from the matrix, both test examples can be launched.

Now let us consider complexity of loops. As previously described in more detail, all known elements are added to a queue, subsequently passing through each element from the queue, all adjacent objects are entered to the end of the queue (with indication of an object which they have been reached from), but objects are inserted in the queue only if they have not been visited yet. This prevents the mivar approach from cycling or passing through the same element more than once. This is due to the fact that in the process of traversing the mivar matrix, information was recorded in each element regarding an element from which the transition to the current element of the mivar net was made. This information allows to build chains from required elements to known ones. The flowcharts demonstrate that parameters to be processed are inserted into the list where necessary, that is why the "linked list" structure has been chosen for implementation; insertion of elements into structures of this type takes O(1). The check often take place within the algorithm for whether an element was added to the inference; for this purpose, such data structure as set was used; average time O(1) is required to determine inclusion of an element in the set. Therefore, complexity of the algorithm depends on the number of objects in the model, and in this case it tends to $0(n)$ (where n is the number of elements of the mivar matrix, i.e. both rules and parameters). But when solving real local problems, complexity is oftentimes much lower and equals O(m), where m is the number of elements involved in the computation, and $m \leq n$.

Below is a brief comparative analysis of the approach provided herein and the approaches that are based on ontologies and cognitive maps, where, as noted above, slower search algorithms are used.

Table 14

| Comparative analysis of mivar approach and ontologies | | |
|---|---|---|
| Parameters for comparison | Ontologies | Mivar approach |
| Preliminary statement of problem and objectives of study | Required | Not required |
| Preliminary study of situation from the viewpoint of problem | Required | Not required |
| Data acquisition | Taking into account constraints of context of studied situation | Without account of constraints of context of studied situation |
| Objectivity of resulting model | - | + |
| Ability to describe features of elements (their properties) | Yes | No |
| Preliminary analysis and formulation of solution paths | Required | Not required |

(continued)

| Comparative analysis of mivar approach and ontologies | | |
|---|---|---|
| Parameters for comparison | Ontologies | Mivar approach |
| Addition of data | Addition of a new element to the hierarchy may require to modify the structure | Addition of a new element leads to automatic modification of the set defining the axis of space |
| Change of data | Data in the hierarchy is changed; change in the model structure may be required | As the result of execution, values of new points in the multidimensional space are stored |
| Description of relation between elements | Typical relations are: "be part of', "belong to set", "match", "be in semantic relation with" | Wide opportunities for description of interaction of objects: formulas, logical transitions, text expressions (and external services) |
| Ability of variable representationЩ a data (class, hierarchical, general, etc.) | Yes | No |
| Subsequent study of described model, determining reality of generalized concepts by expert | Required | Not required |
| Algorithm of the decision-making process | Either algorithm of tree search or search of precedents is used | Automatically designed each time |
| Variability of algorithm | Depends on the situation and choice of decision-making method | Variable |
| Run time of path search | Exponentially increases with the number of elements examined | Runs in real-time (linear computational complexity) |

Based on the foregoing, the conclusion can be made that everything that exists in ontologies can be described and executed using the mivar approach. Moreover, the mivar approach offers a number of further advantages. For example, DSSs based on mivar nets can be both strategic and operative systems. Therefore, it can be said that the mivar approach generalizes and develops ontologies, which, in turn, can be considered as a special case of mivar nets.

Table 15

| Comparative analysis of mivar approach and cognitive maps | | |
|---|---|---|
| Parameters for comparison | Cognitive approach | Mivar approach |
| Preliminary statement of problem and objectives of study | Required | Not required |
| Preliminary study of situation from the viewpoint of problem | Required | Not required |
| Data acquisition | Taking into account constraints of context of studied situation | Without account of constraints of context of studied situation |
| Objectivity of resulting model | - | + |
| Ability to describe features of elements (properties) | No | Yes |
| Ability to describe features for relations | No | Yes |
| Preliminary analysis and formulation of paths of solution | Required | Not required |

(continued)

| Comparative analysis of mivar approach and cognitive maps | | |
|---|---|---|
| Parameters for comparison | Cognitive approach | Mivar approach |
| Addition of data | Addition of an element may require modification of the net structure or modification of values of links of elements | Addition of a new element leads to automatic modification of the set defining the axis of space |
| Change of data | Necessity to rebuild the model may arise | The change results in storing values of new points in the multidimensional space |
| Description of relation between elements | Binary relations (each pair of elements is linked), specified by weight | Wide opportunities for description of interaction of objects: formulas, logical transitions, text expressions (and external services) |
| Ability of variable representation of data (class, hierarchical, general, etc.) | No | Yes |
| Subsequent study of described model, determining reality of generalized concepts by expert | Required | Not required |
| Algorithm of decision-making process | Specified by expert (at the step of describing the problem or depending on objective required at instant of solution) | Automatically designed each time |
| Variability of algorithm | Non-variable | Variable |
| Run time of path search | Exponentially increases with the number of elements examined | Runs in real-time |

Thus, it is obvious that the mivar approach can describe and perform everything that exists in cognitive maps. Moreover, the mivar approach offers a number of additional advantages. Therefore, it can be said that the mivar approach generalizes and develops cognitive maps. And cognitive maps, in turn, can be considered as a special case of mivar nets.
A more detailed comparative analysis of the approach provided in the present application and the aforementioned prior art approaches is given in the publication "Comparative analysis of capabilities of cognitive maps and mivar nets for construction of decision-making support systems", Chibirova M.O., Automation and Control in Technical Systems (AUTS), ISSN 2306-1561, No. 1(8), 2014, pp. 40-54, and "Analysis of Approaches to Construction of Decision Support Systems: Ontologies and Mivars", Chibirova M.O., Automation and Control in Technical Systems (AUTS), ISSN 2306-1561,.2(9), 2014, pp. 44-60, which are included in their entirety in the present specification by reference.
The invention has been disclosed above with reference to specific embodiments. Persons skilled in the art will envisage other embodiments of the invention without departing from the scope of the present invention as it is disclosed herein. Accordingly, the invention should be considered to be limited in scope only by the following claims.

**Claims**

1. A computer-implemented method of automatedly building an inference path in a knowledge base comprising a representation of a model of a domain as objects and links arranged in an oriented bipartite graph, wherein the objects include parameters, and the links include rules, and wherein each rule has at least one input variable and at least one output variable, and each parameter associated with a rule is either an input variable or an output variable of the rule; said method comprising:

generating a collection of known parameters and specifying one or more required parameters;
performing processing with respect to each known parameter which has not undergone said processing before, in order to find the required parameters, said processing comprising:

determining launchable rules wherein: the known parameter is an input variable in the launchable rules, all remaining input variables are known for the launchable rules, and the launchable rules have not been launched before;
launching the determined launchable rules and adding output variables of the launched rules to the collection of known parameters; and
if all the required parameters are found, terminating the processing; and

building a sequence of the launched rules in an order in which they were launched, the built sequence of rules representing the inference path.

2. The method according to claim 1, wherein the collection of known parameters is a queue or stack, and wherein known parameters are successively retrieved from the queue or stack, respectively, to perform said processing.

3. The method according to claim 1, further comprising outputting the found required parameters and the built inference path onto a display device.

4. The method according to claim 3, further comprising outputting an error message and/or unfound required parameters if at least part of the required parameters has not been found as a result of said processing.

5. The method according to claim 2, further comprising, if launchable rules have not been determined for the known parameter, retrieving a next known parameter from the queue or stack, and performing said processing with respect to the next known parameter.

6. The method according to claim 1, further comprising entering the known parameters via a user interface.

7. The method according to claim 1, wherein
for each parameter, information about all rules for which the parameter is an input or output variable is stored as at least one list;
for each rule, information about all input and output variables of the rule, including information about a number of input and output variables of said rule, is stored as at least one list.

8. The method according to claim 7, wherein
for each parameter found in said processing, information is further stored about a launched rule, where the parameter is an output variable, by which said parameter was found;
for each launchable rule, information is further stored about a parameter among parameters, which are an input variable of said rule, that led to determination in said processing that said rule is launchable.

9. The method according to claim 7, wherein, for each rule, an indicator is further stored, the indicator indicating whether the rule was launched or not, and further comprising:

after launching the rule, modifying the indicator to indicate that the rule was launched.

10. The method according to claim 1, wherein
the objects further comprise classes, wherein each class may include other classes and/or parameters, and each parameter relates to only one class;
the links further comprise relations, each relation describing a relationship between abstract variables, wherein each rule includes a reference to a relation.

11. The method according to claim 10, wherein said representation of the model of the domain further comprises one or more restrictions, wherein input variables of each restriction are values of parameters, each restriction comprising a reference to a relation that expresses a condition to be met by the input variables, and an output variable of each restriction is a Boolean variable.

12. The method according to claim 11, further comprising:

launching at least one restriction by specifying respective known parameters as input variables of the restriction; and
outputting an error message and stopping execution of the method if a condition expressed by the restriction is not satisfied by the respective known parameters.

**13.** The method according to claim 1, further comprising:

generating a list of required parameters from said required parameters;
while the list of required parameters is not empty,
retrieving a required parameter from the list of required parameters and identifying a rule by which the selected required parameter was directly determined;
if the identified rule has not been previously added to a global sequence of rules being generated, generating a local sequence of rules involved in determining the selected required parameter, beginning with adding the identified rule to the local sequence of rules, wherein said generating the local sequence of rules comprises, for each rule beginning from said identified rule:

identifying an initiator parameter which is an input variable of the rule and which initiated launching the rule in said processing;
if the rule has one or more other input variables, then adding for each of said one or more other input variables a parameter, which is said input variable, to the beginning of the list of required parameters, and determining a place for insertion of the local sequence of rules, which it to be generated for the added parameter, into the global sequence of rules, the insertion place indicating a rule before which the local sequence of rules to be generated for the added parameter should be inserted into the global sequence of rules;
while said generating the local sequence of rules is not completed:

selecting, from the launched rules, a rule whose output variable is said initiator parameter, and verifying whether the selected rule is present in the global sequence of rules and whether the selected rule is an insertion place;
if the selected rule is present in the global sequence of rules or the selected rule is the insertion place, terminating said generating the local sequence of rules;
if the selected rule is not present in the global sequence of rules and is not the insertion place, adding the selected rule to the end of the local sequence of rules being generated and verifying whether the rule is a rule whose input variables were only known parameters; and
if the input variables of the selected rule were only known parameters, terminating said generating the local sequence of rules; and

if an insertion place is determined for the required parameter, inserting the generated local sequence of rules into the insertion place in the global sequence of rules, otherwise adding the local sequence of rules to the end of the global sequence of rules;
wherein the generated global sequence of rules represents an optimized inference path.

**14.** The method according to claim 13, wherein the adding the rule to the local sequence of rules further comprises: entering output variables of said rule to a list of found parameters being formed if the output variables are not present in the list of found parameters, and removing, from the list of required parameters, the required parameters which are present in the list of found parameters.

**15.** The method according to claim 13, wherein each of the local sequence of rules and the global sequence of rules is a list, and the list of required parameters is a linked list.

**16.** A computer-implemented system for automatically building an inference path in a knowledge base comprising a representation of a model of a domain as objects and links arranged in an oriented bipartite graph, wherein the objects include parameters, and the links include rules, and wherein each rule has at least one input variable and at least one output variable, and each parameter associated with a rule is either an input variable or an output variable of the rule; said system comprising:

means for generating a collection of known parameters and specifying one or more required parameters;
means for performing processing with respect to each known parameter which has not undergone said processing before, in order to find the required parameters, said processing comprising:

determining launchable rules wherein: the known parameter is an input variable in the launchable rules, all remaining input variables are known for the launchable rules, and the launchable rules have not been launched before;

launching the determined launchable rules and adding output variables of the launched rules to the collection of known parameters; and

if all the required parameters are found, terminating the processing; and

means for building a sequence of the launched rules in an order in which they were launched, the built sequence of rules representing the inference path.

**17.** A computer device configured for automatedly building an inference path in a knowledge base comprising a representation of a model of a domain as objects and links arranged in an oriented bipartite graph, wherein the objects include parameters, and the links include rules, and wherein each rule has at least one input variable and at least one output variable, and each parameter associated with a rule is either an input variable or an output variable of the rule; said computer device comprising:

one or more processors; and
one or more data storage units having computer-executable instructions stored therein, the computer-executable instructions, when executed by the one or more processors, causing the one or more processors to:

generate a collection of known parameters and specify one or more required parameters;
perform processing with respect to each known parameter which has not undergone said processing before, in order to find the required parameters, said processing comprising:

determining launchable rules wherein: the known parameter is an input variable in the launchable rules, all remaining input variables are known for the launchable rules, and the launchable rules have not been launched before;
launching the determined launchable rules and adding output variables of the launched rules to the collection of known parameters; and
if all the required parameters are found, terminating the processing; and

build a sequence of the launched rules in an order in which they were launched, the built sequence of rules representing the inference path.

**18.** A computer-readable storage medium having computer-executable instructions stored therein, the computer-executable instructions, when executed, causing a computer to execute the method of automatedly building an inference path in a knowledge base according to any one of claims 1 to 15.

**19.** A computer-implemented method of automatedly building an inference path in a knowledge base comprising a representation of a model of a domain as objects and links arranged in an oriented bipartite graph, wherein the objects include parameters, and the links include rules, and wherein each rule has at least one input variable and at least one output variable, and each parameter associated with a rule is either an input variable or an output variable of the rule; said method comprising:

generating a collection of known parameters and specifying one or more required parameters;
performing processing with respect to each known parameter which has not undergone said processing before, in order to find the required parameters, said processing comprising:

determining launchable rules wherein: the known parameter is an input variable in the launchable rules, all remaining input variables are known for the launchable rules, and the launchable rules have not been launched before;
launching the determined launchable rules and adding output variables of the launched rules to the collection of known parameters; and
if all the required parameters are found, terminating the processing;

building a sequence of the launched rules in an order in which they were launched, the built sequence of rules representing the inference path; and
filtering the built sequence of rules so that said sequence contains only those rules the launching of which was directly involved in finding the required parameters.

20. The method according to claim 19, wherein the collection of known parameters is a queue or stack, and wherein known parameters are successively retrieved from the queue or stack, respectively, to perform said processing.

21. The method according to claim 20, further comprising outputting the found required parameters and the built inference path onto a display device.

22. The method according to claim 21, further comprising outputting an error message and/or unfound required parameters if at least part of the required parameters has not been found as a result of said processing.

23. The method according to claim 20, further comprising, if launchable rules have not been determined for the known parameter, retrieving a next known parameter from the queue or stack, and performing said processing with respect to the next known parameter.

24. The method according to claim 19, further comprising entering the known parameters via a user interface.

25. The method according to claim 19, wherein
for each parameter, information about all rules for which the parameter is an input or output variable is stored as at least one list;
for each rule, information about all input and output variables of the rule, including information about a number of input and output variables of said rule, is stored as at least one list.

26. The method according to claim 25, wherein
for each parameter found in said processing, information is further stored about a launched rule, where the parameter is an output variable, by which said parameter was found;
for each launchable rule, information is further stored about a parameter among parameters, which are an input variable of said rule, that led to determination in said processing that said rule is launchable.

27. The method according to claim 25, wherein, for each rule, an indicator is further stored, the indicator indicating whether the rule was launched or not, and further comprising:

after launching the rule, modifying the indicator to indicate that the rule was launched.

28. The method according to claim 19, wherein
the objects further comprise classes, wherein each class may include other classes and/or parameters, and each parameter relates to only one class;
the links further comprise relations, each relation describing a relationship between abstract variables, wherein each rule includes a reference to a relation.

29. The method according to claim 28, wherein said representation of the model of the domain further comprises one or more restrictions, wherein input variables of each restriction are values of parameters, each restriction comprising a reference to a relation that expresses a condition to be met by the input variables, and an output variable of each restriction is a Boolean variable.

30. The method according to claim 29, further comprising:

launching at least one restriction by specifying respective known parameters as input variables of the restriction; and
outputting an error message and stopping execution of the method if a condition expressed by the restriction is not satisfied by the respective known parameters.

31. The method according to claim 19, wherein said filtering comprises:

generating a list of required parameters from said required parameters;
while the list of required parameters is not empty,
retrieving a required parameter from the list of required parameters and identifying a rule by which the selected required parameter was directly determined;
if the identified rule has not been previously added to a global sequence of rules being generated, generating a local sequence of rules involved in determining the selected required parameter, beginning with adding the identified rule to the local sequence of rules, wherein said generating the local sequence of rules comprises, for each rule beginning from said identified rule:

identifying an initiator parameter which is an input variable of the rule and which initiated launching the rule in said processing;

if the rule has one or more other input variables, then adding for each of said one or more other input variables a parameter, which is said input variable, to the beginning of the list of required parameters, and determining a place for insertion of the local sequence of rules, which it to be generated for the added parameter, into the global sequence of rules, the insertion place indicating a rule before which the local sequence of rules to be generated for the added parameter should be inserted into the global sequence of rules;

while said generating the local sequence of rules is not completed:

selecting, from the launched rules, a rule whose output variable is said initiator parameter, and verifying whether the selected rule is present in the global sequence of rules and whether the selected rule is an insertion place;

if the selected rule is present in the global sequence of rules or the selected rule is the insertion place, terminating said generating the local sequence of rules;

if the selected rule is not present in the global sequence of rules and is not the insertion place, adding the selected rule to the end of the local sequence of rules being generated and verifying whether the rule is a rule whose input variables were only known parameters, and

if the input variables of the selected rule were only known parameters, terminating said generating the local sequence of rules; and

if an insertion place is determined for the required parameter, inserting the generated local sequence of rules into the insertion place in the global sequence of rules, otherwise adding the local sequence of rules to the end of the global sequence of rules;

wherein the generated global sequence of rules represents an optimized inference path.

32. The method according to claim 31, wherein the adding the rule to the local sequence of rules further comprises: entering output variables of said rule to a list of found parameters being formed if the output variables are not present in the list of found parameters, and removing, from the list of required parameters, the required parameters which are present in the list of found parameters.

33. The method according to claim 31, wherein each of the local sequence of rules and the global sequence of rules is a list, and the list of required parameters is a linked list.

34. A computer-implemented system for automatically building an inference path in a knowledge base comprising a representation of a model of a domain as objects and links arranged in an oriented bipartite graph, wherein the objects include parameters, and the links include rules, and wherein each rule has at least one input variable and at least one output variable, and each parameter associated with a rule is either an input variable or an output variable of the rule; said system comprising:

means for generating a collection of known parameters and specifying one or more required parameters;

means for performing processing with respect to each known parameter which has not undergone said processing before, in order to find the required parameters, said processing comprising:

determining launchable rules wherein: the known parameter is an input variable in the launchable rules, all remaining input variables are known for the launchable rules, and the launchable rules have not been launched before;

launching the determined launchable rules and adding output variables of the launched rules to the collection of known parameters; and

if all the required parameters are found, terminating the processing;

means for building a sequence of the launched rules in an order in which they were launched, the built sequence of rules representing the inference path; and

means for filtering the built sequence of rules so that said sequence contains only those rules the launching of which was directly involved in finding the required parameters.

**35.** A computer device configured for automatedly building an inference path in a knowledge base comprising a representation of a model of a domain as objects and links arranged in an oriented bipartite graph, wherein the objects include parameters, and the links include rules, and wherein each rule has at least one input variable and at least one output variable, and each parameter associated with a rule is either an input variable or an output variable of the rule; said computer device comprising:

one or more processors; and
one or more data storage units having computer-executable instructions stored therein, the computer-executable instructions, when executed by the one or more processors, causing the one or more processors to:

generate a collection of known parameters and specify one or more required parameters;
perform processing with respect to each known parameter which has not undergone said processing before, in order to find the required parameters, said processing comprising:

determining launchable rules wherein: the known parameter is an input variable in the launchable rules, all remaining input variables are known for the launchable rules, and the launchable rules have not been launched before;
launching the determined launchable rules and adding output variables of the launched rules to the collection of known parameters; and
if all the required parameters are found, terminating the processing;

build a sequence of the launched rules in an order in which they were launched, the built sequence of rules representing the inference path; and
filter the built sequence of rules so that said sequence contains only those rules the launching of which was directly involved in finding the required parameters.

**36.** A computer-readable medium having computer-executable instructions stored therein, the computer-executable instructions stored, when executed, causing a computer to execute the method of automatedly building an inference path in a knowledge base according to any one of claims 19 to 33.

FIG. 1

**OBJECTS – INPUT (IF...)    RULES    OBJECTS – OUTPUT (... THEN)**

FIG. 2

START

(301) ------- ENTER REQUIRED PARAMETERS

(302) ------- ENTER KNOWN PARAMETERS

(303) ------- FORM QUEUE OF KNOWN PARAMETERS

(304) ------- ARE ALL REQUIRED PARAMETERS KNOWN?

ДА

HET

(306) ------- IS QUEUE EMPTY?

ДА

HET

HET

(305) -- DEDUCE KNOWN PARAMETERS FROM ALGORITHM

(308) ------- TAKE KNOWN PARAMETER FROM QUEUE

(307) -- OUTPUT "NO DECISION"

(309) ------- FORM LIST OF LINKED RULES

END

(310) ------- ARE THERE LAUNCHABLE RULES?

ДА

(311) ------- LAUNCH RULE(S)

(312) ------- UPDATE LIST OF KNOWN PARAMETERS

(313) ------- UPDATE QUEUE

# FIG. 3

FIG. 4

START

(501) --- FORM LINKED LIST OF REQUIRED PARAMETERS

(502) --- CLEAR LIST OF FOUND PARAMETERS

ДА

(503) --- IS LINKED LIST EMPTY?

ДА → КОНЕЦ

НЕТ

(504) --- SELECT NEXT REQUIRED PARAMETER AND IDENTIFY RULE BY WHICH IT WAS COMPUTED

(505) --- DOES GLOBAL LIST ALREADY CONTAIN IDENTIFIED RULE?

НЕТ

(506) --- ASSEMBLE LOCAL ALGORITHM (AS LIST) TO COMPUTE SELECTED PARAMETER

(507) --- IS THE END OF LOCAL ALGORITHM REACHED?

ДА

НЕТ

(508) --- SELECT CURRENT RULE

(509) --- IS CURRENT RULE IN GLOBAL LIST OR IS IT INSERTION PLACE?

ДА

НЕТ

INSERT LOCAL ALGORITHM TO GLOBAL LIST --- (512)

(510) --- ADD ALL INITIAL PARAMETERS OF RULE TO LIST OF FOUND PARAMETERS

(511) --- ADD ALL INITIAL PARAMETERS OF RULE TO LIST OF FOUND PARAMETERS

FIG. 5

(a)  (б)  (в)

FIG. 6

| Osteoarthritis | Signs of osteoarthritis not detected | ☑ |
| Periarteritis nodosa | Signs of periarteritis nodosa not detected | ☑ |
| Gout | Signs of gout not detected | ☑ |
| Polyarthritis infectious atopic | Signs of polyarthritis infectious- atopic not detected | ☑ |
| Rheumatism | Signs of rheumatism not detected | ☑ |
| Rheumatoid arthritis | Signs of rheumatoid arthritis not detected | ☑ |
| Systemic lupus erythematosus | Possible systemic lupus erythematosus | ☑ |
| Systemic scleroderma | Signs of systemic scleroderma not detected | ☑ |
| Presbyopia | Possible presbyopia | ☑ |
| Sympathetic ophthalmia | Sympathetic ophthalmia not detected | ☑ |
| Scleritis | Scleritis not detected | ☑ |
| Phlegmon | Phlegmon not detected | ☑ |
| Endophthalmitis | Endophthalmitis not detected | ☑ |
| Ulcer of the cornea | Ulcer of the cornea not detected | ☑ |

FIG. 9

| Arbitrary triangle | | |
|---|---|---|
| Angle A, opposite to side a (deg) | ☐ | ☐ Find parameter |
| Angle B, opposite to side b (deg) | ☐ | ☐ Find parameter |
| Angle C, opposite to side c (deg) | ☐ | ☐ Find parameter |
| Side a | ☐ | ☐ Find parameter |

FIG. 7

| Произвольный треугольник | | |
|---|---|---|
| Angle A, opposite to side a (deg) | 30 | ☐ Find parameter |
| Angle B, opposite to side b (deg) | 70 | ☐ Find parameter |
| Angle C, opposite to side c (deg) | 80 | ☐ Find parameter |
| Side a | 5 | ☐ Find parameter |
| Side b | 9,3969262078 | ☐ Find parameter |
| Side c | ☐ | ☐ Find parameter |
| Escribed circle radius R | 5 | ☐ Find parameter |
| Escribed circle radius r | 1,90846862388 | ☑ Find parameter |

FIG. 8

## INTERNATIONAL SEARCH REPORT

International application No.

PCT/RU 2016/050003

**A. CLASSIFICATION OF SUBJECT MATTER**

G06F 17/20 (2006.01)

According to International Patent Classification (IPC) or to both national classification and IPC

**B. FIELDS SEARCHED**

Minimum documentation searched (classification system followed by classification symbols)

G06F 17/00-17/40, G09B 19/00, G06F15/00-15/18, G06F 1/00

Documentation searched other than minimum documentation to the extent that such documents are included in the fields searched

Electronic data base consulted during the international search (name of data base and, where practicable, search terms used)

PatSearch (RUPTO internal), USPTO, PAJ, K-PION, Esp@cenet, Information Retrieval System of FIPS

**C. DOCUMENTS CONSIDERED TO BE RELEVANT**

| Category* | Citation of document, with indication, where appropriate, of the relevant passages | Relevant to claim No. |
|---|---|---|
| X | RU 2236700 C1 (OTKRYTOE AKTSIONERNOE OBSHCHESTVO "MOSKOVSKAYA TEZHKOMMUNIKAPIONNAYA KORPORATSIYA") 20.09.2004, pages 3-13 | 1-36 |
| A | WO 2014/037922 A2 (KONINKL PHILIPS NV) 13.03.2014 | 1-36 |
| A | WO 2009/023068 A1 (UNIVERSAL PASSAGE INC) 19.02.2009 | 1-36 |
| A | US 2009/0326792 A1 (ALAN THOMAS MCGRATH) 31.12.2009 | 1-36 |
| A | US 2013/0006649 A1 (VASU RANGADASS et al) 03.01.2013 | 1-36 |

☐ Further documents are listed in the continuation of Box C.  ☐ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 23 May 2016 (23.05.2016) | 02 June 2016 (02.06.2016) |

| Name and mailing address of the ISA/ | Authorized officer |
|---|---|
| | |
| Facsimile No. | Telephone No. |

Form PCT/ISA/210 (second sheet) (July 1998)

## REFERENCES CITED IN THE DESCRIPTION

**Patent documents cited in the description**

- US 20140114949 A1

- RU 2485581 C1

**Non-patent literature cited in the description**

- **CHIBIROVA M.O.** Comparative analysis of capabilities of cognitive maps and mivar nets for construction of decision-making support systems. *Automation and Control in Technical Systems (AUTS),* 2014, vol. 8 (1), ISSN 2306-1561, 40-54

- **CHIBIROVA M.O.** Analysis of Approaches to Construction of Decision Support Systems: Ontologies and Mivars. *Automation and Control in Technical Systems (AUTS),* 2014, vol. 2 (9), ISSN 2306-1561, 44-60